Europäisches Patentamt

European Patent Office

Office européen des brevets

(11) Numéro de publication: **0 294 253 B1**

(12) **FASCICULE DE BREVET EUROPEEN**

(45) Date de publication de fascicule du brevet: **18.01.95** (51) Int. Cl.⁶: **C08L 23/10**, C08L 23/04,
C08F 8/50

(21) Numéro de dépôt: **88401094.3**

(22) Date de dépôt: **05.05.88**

(54) **Compositions thermoplastiques, leur procédé de préparation et leur application à l'obtention d'articles industriels.**

(30) Priorité: **07.05.87 FR 8706431**

(43) Date de publication de la demande:
**07.12.88 Bulletin 88/49**

(45) Mention de la délivrance du brevet:
**18.01.95 Bulletin 95/03**

(84) Etats contractants désignés:
**AT BE CH DE ES FR GB GR IT LI LU NL SE**

(56) Documents cités:
**EP-A- 0 191 990
US-A- 4 514 534
US-A- 4 614 764**

(73) Titulaire: **ECP ENICHEM POLYMERES FRANCE
13, rue de l'Abreuvoir
F-92411 Courbevoie (FR)**

(72) Inventeur: **Audureau, Joel
50, rue des Normands
F-62290 Noeux les Mines (FR)**
Inventeur: **Crenna, Vincent
56, Square Bach
Fleurines
F-60700 Pont Ste Maxence (FR)**

EP 0 294 253 B1

**Description**

On connaît déjà des compositions de polymères de l'éthylène et de polypropylène.

Ainsi le document FR-A-2529563 décrit des compositions comprenant de 10 à 40% en poids de polypropylène isotactique et de 60 à 90% en poids d'au moins un copolymère d'éthylène et d'$\alpha$-oléfines comprenant au moins 4 atomes de carbone, de densité comprise entre 0,905 et 0,940 et d'indice de fluidité compris entre 0,2 et 3 dg/min, la teneur en motifs $\alpha$-oléfine du copolymère étant comprise entre 1 et 8% en moles. Ces compositions permettent la fabrication de fils monoorientés possèdant, en particulier, une ténacité élevée.

Par ailleurs le document EP-A-0052557 décrit des compositions ayant une résistance au choc améliorée et contenant de 40 à 98% en poids de polypropylène isotactique et de 2 à 60% en poids d'un copolymère ayant une densité au plus égale à 0,935, obtenu à partir de 85 à 96% en poids d'éthylène et de 4 à 15% en poids d'au moins une $\alpha$-oléfine.

On connaît également par le document FR-A-2519007 des copolymères modifiés de l'éthylène et d'au moins une $\alpha$-oléfine ayant de 3 à 12 atomes de carbone, comprenant de 0,5 a 10% en moles de motifs dérivés de ladite $\alpha$-oléfine, caractérisés en ce que leur viscosité limite mesurée est comprise entre 1,5 et 10 fois leur viscosité limite calculée à partir de la distribution des masses moléculaires.

On a maintenant trouvé un moyen d'obtenir des compositions thermoplastiques possédant des propriétés mécaniques améliorées, en particulier la résilience à basse température, l'allongement à la rupture et la résistance à la rupture, par rapport aux compositions connues en utilisant en combinaison avec le polypropylène, au lieu d'un copolymère d'éthylène et d'$\alpha$-oléfines, un polyéthylène ou un copolymère éthylène/$\alpha$-oléfine préparé par catalyse Ziegler et ayant subi une modification telle que le rapport de ses viscosités limites mesurée et calculée soit compris dans une certaine gamme.

La présente invention a pour objet une composition thermoplastique contenant :

a) moins de 90% et au moins 2% en poids d'au moins un polymère (A) d'éthylène et, le cas échéant, d'au moins une $\alpha$-oléfine ayant de 3 à 12 atomes de carbone, ledit polymère contenant au moins 70% en moles de motifs dérivés de l'éthylène, et

b) plus de 10% et jusqu'à 98% en poids d'au moins un polymère (B) contenant au moins 85 % en modes de motifs dérivés d'au moins une $\alpha$-oléfine ayant de 3 à 12 atomes de carbone et au plus 15% en modes de motifs dérivés de l'éthylène, caractérisée en ce que le polymère (A) est un polymère modifié dont la viscosité limite mesurée est comprise entre 1,3 et 100 fois sa viscosité limite calculée à partir de la distribution des masses moléculaires.

Par polymère (A) on entend un polymère obtenu par homopolymerisation de l'éthylène ou par copolymérisation de l'éthylène et d'au moins une $\alpha$-oléfine ayant de 3 à 12 atomes de carbone en présence d'un système catalytique de type Ziegler comprenant par exemple au moins un catalyseur à base de métal de transition des groupes IVB à VIB de la Classification Périodique et le cas échéant, au moins un activateur comprenant un hydrure et/ou un dérivé organométallique d'un métal des groupes IA à IIIA de la Classification Périodique, et modifié, par exemple par action d'une faible quantité d'au moins un initiateur de radicaux libres, de façon que sa viscosité limite mesurée soit comprise entre 1,3 et 100 fois sa viscosité limite calculée à partir de la distribution des masses moléculaires. Ces notions de modification et de viscosités limites sont décrites de façon détaillée dans le document FR-A-2519007. La modification de l'homopopolymère ou du copolymère de l'éthylène peut être également réalisée en dispersant, préalablement à son action sur ledit homopolymère ou copolymère, l'initiateur de radicaux libres dans une phase polymérique comprenant au moins un polymère contenant au moins 90% en moles de motifs dérivés d'au moins une $\alpha$-oléfine ayant de 3 à 12 atomes de carbone et au plus 10% en moles de motifs dérivés de l'éthylène, ladite phase étant présente en quantité telle que sa proportion dans la composition résultante soit comprise entre 0,2 et 10% en poids.

Le polymère (A) possède généralement une densité (déterminée selon la norme ASTM 1505) comprise entre 0,86 et 0,97. Selon l'application envisagée on choisira un polymère plutôt majoritairement cristallin ou plutôt majoritairement amorphe.

Le polymère (A) possède généralement un indice de fluidité standard (mesuré selon la norme ASTM D 1238 - condition E) choisi entre 0,05 et 150 dg/min, avantageusement entre 10 et 30 dg/min si les compositions sont destinées à être transformées par injection, avantageusement entre 0,2 et 2 dg/min si les compositions sont destinées à être transformées en films, en particulier par extrusion-soufflage de gaines tubulaires.

L'$\alpha$-oléfine entrant dans la constitution des copolymères (A) est choisie avantageusement parmi le propylène, le butène-1, le pentène-1, l'hexène-1, le méthyl-4-pentène-1, l'octène-1 et leurs mélanges.

2

Le polymère (B) peut être notamment le polypropylène (particulièrement le polypropylène isotactique), le polybutène-1, le poly(méthyl-4-pentène-1), un poly(propylène-éthylène) ou un poly(butène-1-éthylène) contenant au moins 85 % en moles de motifs dérivés respectivement du propylène ou du butène-1, un poly(propylène/butène-1/éthylène) contenant moins de 15% en moles de motifs dérivés de l'éthylène ou un poly(propylène-butène-1). Avantageusement le polymère (B) possède un indice de fluidité (selon la norme ASTM D 1238 à 230°C sous une charge de 5 Kg) compris entre 0,2 et 150 dg/min.

La présente invention a également pour objet un procédé de préparation d'une composition telle que décrite ci-dessus, caractérisé en ce qu'il consiste à mettre un polymère d'éthylène et, le cas échéant, d'au moins une α-oléfine ayant de 3 à 12 atomes de carbone, en présence

- d'une part, d'au moins un initiateur de radicaux libres, en une quantité comprise entre 0,001 et 0,3 parties en poids d'initiateur pour 100 parties en poids dudit polymère à une température supérieure à la température de fusion dudit

polymère pendant une durée supérieure ou égale au dixième du temps de demi-vie de l'initiateur à la température considérée, et

- d'autre part d'au moins un polymère (B), l'initiateur de radicaux libres éfant, préalablement à sa mise en présence du polymère à modifier, dispersé dans au moins une fraction du polymère (B) à une température inférieure à sa température de décomposition.

La mise en présence dudit polymère et de l'initiateur de radicaux libres permet d'obtenir un polymère modifié (A).

Ce mode opératoire signifie que, dans une première étape on prépare le polymère modifié (A), par exemple selon une technique telle que celle décrite dans le document FR-A-2519007 puis, dans une seconde étape, on lui ajoute le polymère (B). Cette addition peut avoir lieu dans un malaxeur ou une machine de transformation des matières plastiques telle qu'une extrudeuse. Avantageusement chacun des polymères (A) et (B) est réduit à un état finement divisé, par exemple sous forme de granulés qui sont ensuite mélangés à sec et fournissent ainsi une composition prête à l'emploi. Il est également possible de malaxer et d'extruder à chaud le mélange des polymères (A) et (B) et de transformer directement la composition en objets finis, ou bien de la granuler.

La dispersion de l'initiateur dans au moins une fraction du polymère (B) est réalisée par tout moyen connu, choisi en fonction de l'état physique des constituants et/ou du dispositif choisi pour mettre en présence la dispersion d'initiateur avec le polymère à modifier. S'il est nécessaire de chauffer le polymère (B), on opère avantageusement par malaxage à une température telle que l'initiateur de radicaux libres ne se décompose pas ou ne soit que faiblement altéré. La dispersion obtenue est ensuite mise en présence du polymère à modifier, et le cas échéant d'une quantité complémentaire de polymère (B) de façon à obtenir la composition souhaitée, avantageusement dans une machine de transformation des polymères, telle qu'un malaxeur ou une extrudeuse mono-vis ou bi-vis. Cette mise en présence peut être réalisée selon un processus discontinu : le polymère à modifier se présentant sous la forme de poudre de granulométrie de préférence comprise entre 1 et 500 µm ou de granulés est alors introduit dans la machine de transformation simultanément avec la dispersion d'initiateur et, le cas échéant la quantité complémentaire de polymère (B). La dispersion d'initiateur peut être aussi préalablement homogénéisée avec le polymère à modifier et, le cas échéant, la quantité complémentaire de polymère (B) par exemple par mélange de poudre ou de granulés, le mélange homogène étant ensuite introduit dans la machine de transformation. Cette mise en présence peut également être réalisée en continu directement sur une unité de fabrication du (co)polymère à modifier.

Selon une variante du procédé selon l'invention, le polymère à modifier est, préalablement à sa mise en présence de l'initiateur de radicaux libres, mélangé avec au moins une fraction du polymère (B). Cette opération peut être réalisée par exemple en combinant des extrudeuses en série.

Parmi les initiateurs de radicaux libres convenant à la mise en oeuvre du procédé selon l'invention, on peut citer notamment :

- les composés peroxygénés tels que par exemple les peroxydes, les peresters, hydroperoxydes,
- les composés diazoïques tels un 2,2'-azo-bis(acyloxyalcane) comme le 2,2'-azo-bis(acétoxypropane), le 2,2'-azo-bis(2-acétoxy-4-méthylpentane), ou tel le 1-1'-azo-bis(1-formyloxycyclohexane), et
- les hydrocarbures possédant des liaisons carbone-carbone labiles tels que par exemple des diaryl-dialkylalcanes, comme le 2,3-diphényl-2,3- diméthylbutane (couramment désigné sous l'appellation biscumyle) ou le 3,4-diphényl-3,4-diméthylhexane.

La quantité d'initiateur à utiliser dépend du taux de modification que l'on souhaite apporter au polymère à modifier. Pour un taux de modification donné elle varie proportionnellement à la masse moléculaire de l'initiateur.

Selon leur indice de fluidité, les compositions selon l'invention peuvent être transformées en articles industriels par des techniques aussi diverses que :
- pour un indice de fluidité standard (IF) compris entre 0,1 et 3 environ l'extrusion-soufflage de gaines ou de corps creux et l'extrusion de films par filière plate,
- pour un indice de fluidité standard compris entre 2 et 10 environ :
  le roto-moulage et l'injection-soufflage de corps creux,
- pour un indice de fluidité standard compris entre 10 et 100 environ :
  le moulage par injection et l'enduction.

Les exemples non limitatifs suivants ont pour but d'illustrer l'invention.

## I. Polymères utilisés.

On a utilisé en tant que polymères à modifier (P) les produits décrits au tableau I ci-après avec l'indication de leur teneur molaire $C_2$ en motifs dérivés de l'éthylène (exprimée en pourcent), leur densité d (mesurée selon la norme ASTM D 1505) et leur indice de fluidité IF (mesuré selon la norme ASTM D 1238 à 190°C sous 2,16 kg et exprimé en dg/min). Ces polymères (P) sont commercialisés par la Société CdF CHIMIE ETHYLENE ET PLASTIQUES sous les dénominations figurant également au Tableau I. Les polymères P1 à P3 sont des copolymères d'éthylène et de butène-1. Les polymères P4, P5 et P6 sont des terpolymères d'éthylène, de propylène et de butène-1.

On a utilisé en tant que polymère (B), soit un homopolymère du propylène commercialisé sous la dénomination HOSTALEN® 1770 PPT et ayant un indice de fluidité selon la norme ASTM D 1238 de 30 dg/min à 230°C sous 5 kg, ci-après référencé B1, soit un copolymère statistique propylène/éthylène contenant 14 % en moles d'unités dérivées de l'éthylène, commercialisé sous la dénomination VESTO-LEN® P 2300 et ayant un indice de fluidité selon la norme ASTM D 1238 de 15 dg/min. à 230°C sous 2,16 kg, ci-après référencé B2.

## II. Transformation par injection.

### 1. Conditions d'injection.

Toutes les compositions, ont été préparées par malaxage sur une extrudeuse mono-vis dans les mêmes conditions de température pour un polymère de départ donné. Les mélanges ont ensuite été transformés en éprouvettes par injection dans un moule à 20°C, selon un profil de température de 210°C-200°C-190°C et sous une pression d'injection de 950 bars.

### 2. Mesures réalisées.

On a mesuré sur les éprouvettes obtenues, de dimensions normalisées :
- la résistance au choc RC déterminée :
  . soit selon la norme ISO R 179 sur éprouvettes entaillées, à -20°C ou-40°C, (ci-après référencé RC), exprimée en kJ/m2,
  . soit selon la norme française NFT 51118 (essai de choc multiaxial instrumenté, ci-après référencé CMI) sur éprouvettes de 1,7 mm d'épaisseur, exprimée par la la force (F) au point de rupture, en Newtons, et l'énergie (E) au point de rupture en Joules, à 23°C, ou bien
- l'allongement à la rupture AR déterminée selon la norme ASTM D 638 et exprimé en %

## Exemples 1 à 8 (comparatifs)

Des compositions de polymères à modifier et du polymère (B) ont été préparées selon les spécifications du tableau II ci-après, dans lequel sont également consignés les résultats des mesures les concernant. La résistance à la rupture RRL, dans le sens longitudinal, déterminée selon la norme ASTM D 638, d'une composition contenant 80% en poids de polymère (P1) et 20% en poids de polymère (B1) est égale à 155 daN/cm². La résistance à la rupture d'une composition contenant 80 % en poids de polymère (P4) et 20 % en poids de polymère (B1) est égale à 89 daN/cm2 dans le sens longitudinal (RRL) et à 105 daN/cm2 dans le sens transversal (RRT).

**Exemples 9 à 27**

Les compositions selon l'invention ont été préparées en utilisant comme initiateur de radicaux libres un 2,2'-azo-bis(acétoxy-propane) commercialisé sous la dénomination LUAZO® AP (ci-après : AP), pour les exemples 9 à 12 et 22 à 27, ou le α-α-bis(terbutylperoxy)diisopropylbenzène commercialisé sous la dénomination PERKADOX® Y 14/96 (ci-après Y) pour les exemples 14,16, 18, 20 et 21, et en suivant l'un ou l'autre des modes de réalisation décrits ci-après.

a) Premier mode de réalisation (exemples 9 à 20):

Chacun des polymères (A)n a été préparé en ajoutant au polymère à modifier (P)n correspondant, une proportion (exprimée en ppm et spécifiée aux tableaux III et IV) de l'initiateur préalablement dispersé dans une quantité de polymère (B) représentant environ 1 à 2 % en poids par rapport au polymère (P) dans une extrudeuse mono-vis selon un profil de température de 230-290°C (pour l'initiateur AP) et selon un profil de température de 170-220°C (pour l'initiateur Y) et pendant un temps de contact de 3 min. Le rapport $\eta_o^m/\eta_o^c$ de sa viscosité limite mesurée à sa viscosité limite calculée figure aux tableaux III et IV ci-après.

Le polymère (A) ainsi obtenu a été mélangé avec le polymère (B) sur une extrudeuse mono-vis à une température de 240°C et pendant une durée de 2 min., selon la proportion en poids indiquée aux tableaux III et IV. Les propriétés des compositions obtenues sont indiquées également aux mêmes tableaux. Les exemples 13, 15, 17 et 19 sont comparatifs (copolymères P non modifiés).

Les résistances à la rupture (RRL) de compositions, obtenues selon ce premier mode de réalisation, contenant 80% en poids de polymère (A1) et 20% en poids de polymère (B1) sont, respectivement, égales à 173 daN/cm2 si le polymère (A1) a été obtenu en modifiant le polymère (P1) à l'aide de 200 ppm d'initiateur AP et à 203 daN/cm2 si le polymère (A1) a été obtenu en modifiant le polymère (P1) à l'aide de 375 ppm du même initiateur. De même les résistances à la rupture de compositions comprenant 80 % en poids de polymère (A4) et 20 % en poids de polymère (B1) sont, respectivement, égales à : RRL = 105 daN/cm2 et RRT = 125 daN/cm2 si le polymère (A4) a été obtenu en modifiant le polymère P4 à l'aide de 450 ppm d'initiateur AP ; elles sont égales à RRL = 103 daN/cm2 et RRT = 140 daN/cm2 si le polymère (A4) a été obtenu à l'aide de 850 ppm du même initiateur. L'allongement à la rupture, dans le sens longitudinal, de la composition de l'exemple 9 est de 300%.

b) Second mode de réalisation (exemples 21 à 27)

On a dans un premier temps préparé une dispersion de l'initiateur de radicaux libres dans une fraction du polymère (B) par mélange à sec. Cette dispersion a été ensuite mélangée aux granulés de polymère (B) et aux granulés de polymère à modifier (P) en des quantités telles que le pourcentage pondéral de (B) dans la composition finale et que la proportion d'initiateur (exprimée en ppm) par rapport au polymère à modifier soient ceux spécifiés au tableau V. Ce mélange de granulés est extrudé dans une extrudeuse mono-vis selon un profil de température de 230-290°C (pour l'initiateur AP) et selon un profil de température de 170-220°C (pour l'initiateur Y) et pendant une durée de 3 min.. On a obtenu ainsi les compositions figurant au Tableau V où l'on a également indiqué les résultats des mesures effectuées.

**III - Transformation en films par extrusion-soufflage de gaine**

1. Conditions d'extrusion-soufflage

On a utilisé une extrudeuse KIEFEL de type 60 munie d'une filière annulaire permettant de fabriquer des films de 50 $\mu$m d'épaisseur. Le taux de gonflage de la gaine (rapport du diamètre de la gaine au diamètre de la filière) est de 3. La gaine est refroidie à la sortie de la filière au moyen d'air à 20°C.

2. Mesures réalisées

On a déterminé le débit maximal Q admissible lors de l'extrusion-soufflage, en deça duquel la gaine soufflée est stable. Il est exprimé en kg de composition par heure.

Sur les films de 50 $\mu$m d'épaisseur obtenus on a mesuré :
- la résistance à l'impact Ri, selon la norme ASTM D 1709, exprimée en grammes, et
- la rigidité exprimée au moyen du module sécant à 1 % d'allongement dans le sens longitudinal (MSL) déterminé selon la norme NF T 54102 et exprimé en daN/cm2.

**Exemples 28 à 31**

On a d'abord préparé des compositions contenant d'une part un copolymère d'éthylène et de butène-1 commercialisé par la société CdF CHIMIE ETHYLENE ET PLASTIQUES sous la dénomination LOTREX® FC 1010, contenant 96 % en moles de motifs dérivés de l'éthylène, ayant un indice de fluidité de 1 dg/min et une densité de 0,918 et d'autre part le copolymère B2 déjà décrit ci-dessus.

Le copolymère éthylène/butène-1 contenu dans ces compositions a été modifié au moyen de 170 ppm d'initiateur AP, préalablement dispersé dans une fraction du polymère B2 à une teneur de 2,5 %, dans une extrudeuse monovis à 190°C. La composition obtenue a ensuite été granulée et les granulés transformés en films comme indiqué ci-dessus.

On a résumé au tableau VI les caractéristiques des compositions utilisées (indice de fluidité (IF) selon la norme ASTM D 1238 à 190°C sous 2,16 kg et densité (d)) et les résultats obtenus.

Les résultats des exemples 30 et 31, donnés à titre comparatif, ont été obtenus à l'aide de copolymères éthylène/butène-1 ayant respectivement la même rigidité que les compositions des exemples 28 et 29 selon l'invention. On constate que les compositions selon l'invention permettent à rigidité équivalente, d'augmenter le débit d'extrusion et d'améliorer la résistance à l'impact des films obtenus.

Des compositions, non modifiées, conduisent à des débits maxima analogues à ceux de copolymères éthylène/butène- 1 utilisés seuls.

TABLEAU I

| Polymère à modifier | Dénomination commerciale | %$C_2$ | d | IF (dg/min) |
|---|---|---|---|---|
| P1 | LOTREX® MY 1610 | 99,8 | 0,960 | 16 |
| P2 | LOTREX® MG 2200 | 98,2 | 0,940 | 20 |
| P3 | LOTREX® MC 2300 | 96 | 0,920 | 20 |
| P4 | NORSOFLEX® MW 1960 | 89,3 | 0,900 | 14 |
| P5 | NORSOFLEX® FW 1900 | 88 | 0,900 | 1 |
| P6 | NORSOFLEX® MW 2438 | 75,7 | 0,870 | 2 |

## TABLEAU II

| Exemple | Nature du polymère (P) | % en poids de polymère (B) | IF (dg/min) | RC (Kj/m$^2$) | AR(%) L | AR(%) T |
|---|---|---|---|---|---|---|
| 1 | P3 | 20 | 14 | 4,8* | 200 | 360 |
| 2 | P4 | 20 | 11 | 14** | | |
| 3 | P4 | 40 | 8 | {10* 5** | | |
| 4 | P2 | 20 | 15 | | 240 | 180 |
| 5 | P1 | 40 | 8,5 | | 46 | 37 |
| 6 | P2 | 40 | 11 | | 52 | 67 |
| 7 | P3 | 40 | 10 | | 76 | 60 |
| 8 | P5 | 80 | 3,9 | 1,6* | 265 | 828 |

## TABLEAU III

| Exemple | (A) | AP (ppm) | $\eta^m_\bullet/\eta^c_\bullet$ (An) | % (B1) | IF (dg/min) | RC (Kj/m$^2$) |
|---|---|---|---|---|---|---|
| 9 | A3 | 300 | 9 | 20 | 7,2 | 9* |
| 10 | A4 | 450 | 8 | 20 | 6,9 | 31* |
| 11 | A4 | 850 | 20 | 20 | 3,5 | 37** |
| 12 | A4 | 850 | 20 | 40 | 3,7 | {33* 29** |

(*) à -20°C
(**)à -40°C

TABLEAU IV

| Exemple | (A) ou (P) | Y (ppm) | $\eta_o^m / \eta_o^c$ | % (B2) | CMI à 23°C | |
|---|---|---|---|---|---|---|
| | | | | | E (g) | F (N) |
| 13 | P5 | --- | 0,95 | 80 | 21,3 | 1210 |
| 14 | A5 | 200 | 80 | 80 | 26,7 | 1983 |
| 15 | P5 | --- | 1 | 95 | 8,2 | 1470 |
| 16 | A5 | 100 | 50 | 95 | 11,2 | 2254 |
| 17 | P6 | --- | 0,98 | 80 | 19,4 | 1150 |
| 18 | A6 | 750 | 95 | 80 | 27 | 1921 |
| 19 | P6 | --- | 1 | 90 | 19,7 | 1350 |
| 20 | A6 | 250 | 75 | 90 | 23,2 | 2223 |

TABLEAU V

| Exemple | (A) | AP (ppm) | % (B1) | IF (dg/min) | RC (Kj/m$^2$) | AR (%) | |
|---|---|---|---|---|---|---|---|
| | | | | | | L | T |
| 21 | A5 | 200(Y) | 80(B2) | 3,3 | 3,1* | 430 | |
| 22 | A3 | 450 | 20 | 7,1 | 10,5* | 340 | 540 |
| 23 | A4 | 450 | 40 | 7,5 | 28* | | |
| 24 | A2 | 400 | 20 | 5,4 | | 400 | 240 |
| 25 | A1 | 200 | 40 | 3 | | 81 | 81 |
| 26 | A2 | 400 | 40 | 4 | | 107 | 118 |
| 27 | A3 | 300 | 40 | 8 | | 284 | 345 |

(*) à -20°C

TABLEAU VI

| Exemple | % B2 | IF (dg/min) | d | Q (Kg/h) | Ri(g) | MSL (daN/cm$^2$) |
|---|---|---|---|---|---|---|
| 28 | 11 | 0,25 | 0,916 | 152 | 205 | 2130 |
| 29 | 20 | 0,31 | 0,914 | 150 | 92 | 2650 |
| 30 | 0 | 1 | 0,925 | 116 | 125 | 2100 |
| 31 | 0 | 1 | 0,928 | 110 | 60 | 2600 |

## Revendications

1. Composition thermoplastique contenant :

a) moins de 90% et au moins 2% en poids d'au moins un polymère (A) d'éthylène et, le cas échéant, d'au moins une α-oléfine ayant de 3 à 12 atomes de carbone, ledit polymère contenant au moins 70% en moles de motifs dérivés de l'éthylène, et

b) plus de 10% et jusqu'à 98% en poids d'au moins un polymère (B) contenant au moins 85% en moles de motifs dérivés d'au moins une α-oléfine ayant de 3 à 12 atomes de carbone et au plus 15% en moles de motifs dérivés de l'éthylène,

caractérisée en ce que le polymère (A) est un polymère modifié dont la viscosité limite mesurée est comprise entre 1,3 et 100 fois sa viscosité limite calculée à partir de la distribution des masses moléculaires.

2. Composition selon la revendication 1 caractérisée en ce que le polymère (B) est un polypropylène isotactique.

EP 0 294 253 B1

3. Composition selon l'une des revendications 1 et 2 caractérisée en ce que l'indice de fluidité du polymère (B), à 230°C sous une charge de 5 Kg, est compris entre 0,2 et 150 dg/min.

4. Composition selon l'une des revendications 1 à 3 caractérisée en ce que le polymère (A) possède une densité comprise entre 0,86 et 0,97.

5. Composition selon l'une des revendications 1 à 4 caractérisée en ce que l'indice de fluidité standard du polymère (A) est compris entre 0,05 et 150 dg/min.

6. Composition selon la revendication 5 caractérisée en ce que l'indice de fluidité standard du polymère (A) est compris entre 10 et 30 dg/min.

7. Composition selon l'une des revendications 1 à 6 caractérisée en ce que la modification du polymère (A) est obtenue par la présence d'au moins un initiateur de radicaux libres.

8. Composition selon l'une des revendications 1 à 7 caractérisée en ce que le polymère (A) a été préparé, avant d'être modifié, par polymérisation au moyen d'un système catalytique de type Ziegler comprenant au moins un métal de transition des groupes IVA à VIA de la Classification Périodique et, le cas échéant, au moins un activateur comprenant au moins un dérivé organo-métallique d'un métal des groupes IA à IIIA de la Classification Périodique.

9. Procédé de préparation d'une composition conforme à l'une des revendications 1 à 8 caractérisé en ce qu'il consiste à mettre un polymère d'éthylène et, le cas échéant, d'au moins une α-oléfine ayant de 3 à 12 atomes de carbone en présence
   - d'une part d'au moins un initiateur de radicaux libres, en une quantité comprise entre 0,001 et 0,3 parties en poids d'initiateur pour 100 parties en poids dudit polymère à une température supérieure à la température de fusion dudit polymère pendant une durée supérieure ou égale au dixième du temps de demi-vie de l'initiateur à la température considérée, et
   - d'autre part d'au moins un polymère (B), l'initiateur de radicaux libres étant, préalablement à sa mise en présence du polymère à modifier, dispersé dans au moins une fraction du polymère (B) à une température inférieure à sa température de décomposition.

10. Procédé selon la revendication 9 caractérisé en ce que le polymère à modifier est, préalablement à sa mise en présence de l'initiateur de radicaux libres, mélangé avec au moins une fraction du polymère (B).

11. Procédé selon l'une des revendications 9 et 10 caractérisé en ce que la mise en présence est réalisée dans une machine de transformation des polymères.

12. Procédé selon l'une des revendications 9 à 11, caractérisé en ce que l'initiateur de radicaux libres est choisi parmi les composés peroxygénés, les composés diazoïques et les hydrocarbures possédant des liaisons carbone-carbone labiles.

13. Application d'une composition conforme à l'une des revendications 1 à 8, à l'obtention d'articles industriels par transformation de la composition par une technique choisie parmi l'extrusion-soufflage de gaines ou de corps creux, l'extrusion de films par filière plate, le roto-moulage, l'injection et l'enduction.

**Claims**

1. Thermoplastic composition containing:
   a) less than 90% and at least 2% by weight of at least one polymer (A) of ethylene and, where appropriate, of at least one alpha-olefin containing from 3 to 12 carbon atoms, the said polymer containing at least 70 mol% of units derived from ethylene, and
   b) more than 10% and up to 98% by weight of at least one polymer (B) containing at least 85 mol% of units derived from at least one alpha-olefin containing from 3 to 12 carbon atoms and not more than 15 mol% of units derived from ethylene,
   characterised in that the polymer (A) is a modified polymer of which the measured limiting viscosity is

9

comprised between 1.3 and 100 times its limiting viscosity calculated from the molecular masses distribution.

2. Composition according to claim 1, characterised in that the polymer (B) is an isotactic polypropylene.

3. Composition according to one of claims 1 and 2, characterised in that the melt index of polymer (B), at 230°C under a load of 5 kg, is between 0.2 and 150 dg/min.

4. Composition according to one of claims 1 to 3, characterised in that the polymer (A) has a density of between 0.86 and 0.97.

5. Composition according to one of claims 1 to 4, characterised in that the standard melt index of the polymer (A) is between 0.05 and 150 dg/min.

6. Composition according to claim 5, characterised in that the standard melt index of the polymer (A) is between 10 and 30 dg/min.

7. Composition according to one of claims 1 to 6, characterised in that the modification of polymer (A) is obtained in the presence of at least one free radical initiator.

8. Composition according to one of claims 1 to 7, characterised in that, before being modified, the polymer (A) has been prepared by polymerisation by means of a Ziegler-type catalyst system comprising at least one transition metal of groups IVA to VIA of the Periodic Classification and, where appropriate, at least one activator comprising at least one organometallic derivative of a metal of groups IA to IIIA of the Periodic Classification.

9. Process for preparing a composition according to one of claims 1 to 8, characterised in that it consists in bringing a polymer of ethylene and, where appropriate, of at least one alpha-olefin containing from 3 to 12 carbon atoms, into contact with
   - on the one hand, at least one free radical initiator, in a quantity of between 0.001 and 0.3 parts by weight of initiator per 100 parts by weight of the said polymer at a temperature above the melting temperature of the said polymer for a period greater than or equal to one tenth of the half-life of the initiator at the temperature in question, and
   - on the other hand, at least one polymer (B), the free radical initiator, before being brought into contact with the polymer to be modified, being dispersed in at least one fraction of the polymer (B) at a temperature below its decomposition temperature.

10. Process according to claim 9, characterised in that, before being brought into contact with the free radical initiator, the polymer to be modified is mixed with at least one fraction of the polymer (B).

11. Process according to one of claims 9 and 10, characterised in that the bringing into contact is carried out in a machine for converting polymers.

12. Process according to one of claims 9 to 11, characterised in that the free radical initiator is chosen from peroxygen compounds, diazo compounds and hydrocarbons containing labile carbon-carbon bonds.

13. Application of a composition according to one of claims 1 to 8, to the production of industrial articles by conversionn of the composition using a technique chosen from the blow-extrusion of bubbles or of hollow bodies, film extrusion using a flat die, rotational moulding, injection moulding and coating.

**Patentansprüche**

1. Thermoplastische Zusammensetzung enthaltend:
   a) weniger als 90 Gew.-% und mindestens 2 Gew.-% wenigstens eines Polymers (A) von Ethylen und gegebenenfalls mindestens einem α-Olefin mit 3 bis 12 Kohlenstoffatomen, wobei das genannte Polymer mindestens 70 Mol-% an von Ethylen abstammenden Einheiten enthält, und
   b) mehr als 10 Gew.-% und bis zu 98 Gew.-% wenigstens eines Polymers (B), das mindestens 85 Mol-% an von mindestens einem α-Olefin mit 3 bis 12 Kohlenstoffatomen abstammenden Einheiten und höchstens 15 Mol-% an von Ethylen abstammenden Einheiten enthält,
dadurch gekennzeichnet, daß das Polymer (A) ein modifiziertes Polymer ist, dessen gemessene Grenzviskosität zwischen dem 1,3-fachen und dem 100-fachen seiner aus der Molekulargewichtsverteilung errechneten Grenzviskosität beträgt.

2. Zusammensetzung nach Anspruch 1, dadurch gekennzeichnet, daß das Polymer (B) ein isotaktisches Polypropylen ist.

3. Zusammensetzung nach Anspruch 1 oder 2, dadurch gekennzeichnet, daß der Schmelzindex des Polymers (B) bei 230°C unter einer Last von 5 kg zwischen 0,2 und 150 dg/min beträgt.

4. Zusammensetzung nach einem der Ansprüche 1 bis 3, dadurch gekennzeichnet, daß das Polymer (A) eine Dichte zwischen 0,86 und 0,97 besitzt.

5. Zusammensetzung nach einem der Ansprüche 1 bis 4, dadurch gekennzeichnet, daß der Standard-Schmelzindex des Polymers (A) zwischen 0,05 und 150 dg/min beträgt.

6. Zusammensetzung nach Anspruch 5, dadurch gekennzeichnet, daß der Standard-Schmelzindex des Polymers (A) zwischen 10 und 30 dg/min beträgt.

7. Zusammensetzung nach einem der Ansprüche 1 bis 6, dadurch gekennzeichnet, daß die Modifizierung des Polymers (A) durch das Vorhandensein mindestens eines Radikalinitiators erreicht ist.

8. Zusammensetzung nach einem der Ansprüche 1 bis 7, dadurch gekennzeichnet, daß das Polymer (A), bevor es modifiziert wird, durch Polymerisation mittels eines Katalysatorsystems des Typs Ziegler, bestehend aus mindestens einem Übergangsmetall der Gruppen IVA bis VIA des Periodensystems und gegebenenfalls mindestens einem Aktivator, der mindestens eine organometallische Verbindung eines Metalls der Gruppen IA bis IIIA des Periodensystems enthält, hergestellt worden ist.

9. Verfahren zur Herstellung einer Zusammensetzung nach einem der Ansprüche 1 bis 8, dadurch gekennzeichnet, daß es darin besteht, ein Polymer von Ethylen und gegebenenfalls mindestens einem α-Olefin mit 3 bis 12 Kohlenstoffatomen zusammenzubringen mit
   - einerseits mindestens einem Radikalinitiator in einer Menge von 0,001 bis 0,3 Gewichtsteilen Initiator auf 100 Gewichtsteile des genannten Polymers bei einer über der Schmelztemperatur des genannten Polymers liegenden Temperatur während einer Zeitspanne, die größer ist als das oder gleich ist dem Zehntel der Halbwertszeit des Initiators bei der berücksichtigten Temperatur, und
   - andererseits mindestens einem Polymer (B), wobei der Radikalinitiator vor seinem Zusammenbringen mit dem zu modifizierenden Polymer bei einer unter seiner Zersetzungstemperatur liegenden Temperatur in zumindest eine Fraktion des Polymers (B) dispergiert wird.

10. Verfahren nach Anspruch 9, dadurch gekennzeichnet, daß das zu modifizierende Polymer vor seinem Zusammenbringen mit dem Radikalinitiator mit zumindest einer Fraktion des Polymers (B) gemischt wird.

11. Verfahren nach Anspruch 9 oder 10, dadurch gekennzeichnet, daß das Zusammenbringen in einer Maschine zur Verarbeitung von Polymeren erfolgt.

12. Verfahren nach einem der Ansprüche 9 bis 11, dadurch gekennzeichnet, daß der Radikalinitiator ausgewählt wird aus der Gruppe bestehend aus den Peroxidverbindungen, den Diazoverbindungen und den Kohlenwasserstoffen mit labilen Kohlenstoff-Kohlenstoff-Bindungen.

13. Verwendung einer Zusammensetzung nach einem der Ansprüche 1 bis 8 bei der Herstellung von industriellen Gegenständen durch Verarbeitung der Zusammensetzung anhand einer Technik, die ausgewählt ist aus der Gruppe bestehend aus dem Extrusionsblasen von Schlauchfolien und Hohlkörpern, dem Extrudieren von Filmen durch eine Breitschlitzdüse, dem Rotoform-Verfahren, dem Spritzgießen und dem Auftragverfahren.